# EUROPÄISCHE PATENTANMELDUNG

(11) **EP 1 995 351 A1**
(43) Veröffentlichungstag der Anmeldung: **26.11.2008**
(21) Anmeldenummer: 08102376.4
(22) Anmeldetag: 07.03.2008
(51) Int. Cl.: C23F 1/46, C23G 1/36

(54) **Verfahren und Vorrichtung zur Rückgewinnung der Basen in einer basischen Ätzlösung**

(30) Priorität: 21.05.2007 JP 2007133657
(71) Anmelder: Nosaka Electric Co., Ltd., Oota-ku Tokyo (JP); Kawahara, Takuo, Edogawa-ku Tokyo (JP)
(72) Erfinder: Kawahara, Takuo c/o Membrane Process Design Office, Tokyo (JP); Nosaka, Hideo c/o Nosaka Electric Co. Ltd., Tokyo (JP)
(74) Vertreter: Staudt, Hans-Peter

(57) **Zusammenfassung**

[Aufgabe] Die Aufgabe dieser Erfindung ist es, mit einer kleinen Vorrichtung Basen zurückzugewinnen und dabei die Ausscheidung von Aluminiumoxid (Al₂O₃) und die Akkumulation von NaC03 und von Schwermetallen zu verhindern, und es ferner zu ermöglichen, dass sich auch in einer basischen Ätzlösung, der Hydrolysehemmer zugesetzt wurden, die Basen zurückgewinnen lassen.

[Mittel zur Lösung der Aufgabe] Diese Erfindung besteht aus einem ersten Prozess, in dem eine basische Ätzlösung, die zum Ätzen von Aluminium verwendet wurde, in ein Elektrolysebad 1 geleitet wird und in dem durch Elektrodialyse mit einer Ionenaustauschermembran ein Teil der freien Basen von der genannten basischen Ätzlösung getrennt wird, und aus einem zweiten Prozess, in dem die Ätzlösung, von der ein Teil der freien Basen getrennt wurde, in einem Zerlegungsbad 4 hydrolysiert und dadurch in NaOH und Al(OH)₃ zerlegt wird und so die Basen zurückgewonnen werden.

Es ist wünschenswert, dass durch die Trennung eines Teils der freien Basen von der Ätzlösung im ersten Prozess das Gewichtsverhältnis der Konzentration der freien Basen zur Konzentration der Metalle, die keine Alkali-Metalle sind, kleiner gleich 1 wird, und dass bei der Hydrolyse Kristallisationskeime hinzugefügt werden.

## Beschreibung

### [Technisches Gebiet]

Beim Ätzen von Aluminium mit einer basischen Lösung sinkt die Ätzgeschwindigkeit mit steigender Al-Konzentration in der Ätzlösung, was sich negativ auf die Qualität auswirkt. Die gelösten Al³⁺-Ionen in der Ätzlösung binden sich
mit Sauerstoff zu den Kationen AlO₂ und Al(OH)₄, was zu Natriummetaaluminat NaAlO₂ in der Lösung führt.

Al + NaOH + H₂O → NaAlO₂ + 3 / 2 H₂

Durch die Hydrolyse von Natriummetaaluminat bildet sich hartes Al₂O₃, das die Ätzbehandlung stört.

Um die Entstehung von Al₂O₃ zu verhindern, muss das Natriummetaaluminat NaAlO₂ in der basischen Ätzlösung vermieden werden. Bisher werden dafür als Verfahren der Zusatz von Kristallisationskeimen (Bayer-Verfahren) und der Zusatz von Hydrolysehemmern verwendet.

Bei ersterem Verfahren geht es darum, Al von der Ätzlösung zu trennen, indem bei der Hydrolyse folgende Reaktion in Gang gesetzt wird.

NaAlO₂ + 2H₂O → NAOH + Al(OH)₃(Al₂O₃)

Dieses Verfahren kommt aber wegen der Anlagengröße, die es benötigt, nicht in Frage; außerdem kann es nicht verhindern, dass sich Al₂O₃ bildet und an den Wänden festsetzt und dadurch den Betrieb stört.

Beim letzteren Verfahren entsteht kein Al₂O₃, so dass Störungen durch Al₂O₃ verhindert werden. Aber da das Al nicht abgetrennt und beseitigt werden kann, muss die Ätzlösung entsorgt und erneuert werden. [Offenlegung der Erfindung] [Aufgaben, die die Erfindung lösen soll]

Die vorliegende Erfindung hat die Aufgabe, für die Vermeidung der bisherigen Probleme folgende Aufgaben zu lösen:
(1) Die Abscheidung von Aluminiumoxid (Al₂O₃) zu vermeiden.
(2) Die Behandlung in kleinen Vorrichtungen zu ermöglichen.
(3) Die Akkumulation von NaCO₃ und Metallen zu vermeiden
(4) Auch in einer basischen Ätzlösung, der Hydrolysehemmer zugesetzt werden,
die Rückgewinnung der Basen zu ermöglichen.

Beim basischen Ätzen von Aluminium treten die abgelösten Al³⁺-Ionen in der Ätzlösung als Natriummetaaluminat NaAlO₂ auf:

Al + NaOH + H₂O → NaAlO₂ + 3 / 2 H₂

Dieses Natriummetaaluminat NaAlO₂ wird, wenn es sich selbst überlassen wird, allmählich hydrolysiert, wodurch das Al abgetrennt wird und die Basen zurückgewonnen werden:

NaAlO₂ + 2H₂O → NAOH + Al(OH)₃

Das entstandene Aluminiumhydroxid Al(OH)₃ wird aber durch Entwässerung zu hartem Al₂O₃, das an den Rohrwänden haftet und große Störungen im Betrieb und bei der Wartung der Geräte verursacht:

Al(OH)₃ → 1/2 Al₂O₃ + 3 / 2 H₂O

Deswegen hat man hauptsächlich in Europa die Basenrückgewinnung durch die Hydrolyse von Natriummetaaluminat NaAlO₂ aufgegeben, indem man der Ätzlösung Hydrolysehemmer wie Natriumglukonat hinzufügt und die Ätzlösung trotz einer hohen Al-Konzentration möglichst lange verwendet. Eine Ätzlösung, der Hydrolysehemmer hinzugefügt werden, lässt sich mit der herkömmlichen Technologie nicht hydrolysieren, so dass die Basen nicht zurückgewonnen werden können.

### [Mittel, mit denen die Aufgaben gelöst werden sollen]

Die Erfindung nach Anspruch 1 besteht aus einem ersten Prozess, in dem eine basische Ätzlösung, die zum Ätzen von Aluminium verwendet wurde, in ein Elektrolysebad geleitet wird, wo durch Elektrodialyse mit einer Ionenaustauschermembran ein Teil der freien Basen von der genannten basischen Ätzlösung getrennt wird, und aus einem zweiten Prozess, in dem die Ätzlösung, von der ein Teil der freien Basen getrennt wurde, hydrolysiert und dadurch in NaOH und Al(OH)₃ zerlegt wird und so die Basen zurückgewonnen werden.

Die Erfindung nach Anspruch 2 ist dadurch gekennzeichnet, dass durch die Trennung eines Teils der freien Basen von der basischen Ätzlösung das Gewichtsverhältnis der Konzentration der freien Basen zur Konzentration der Metalle, die keine Alkali-Metalle sind, kleiner gleich 1 wird; die Erfindung nach Anspruch 3 ist dadurch gekennzeichnet, dass bei der Hydrolysierung Kristallisationskeime hinzugefügt werden; und die Erfindung nach Anspruch 4 ist dadurch gekennzeichnet, dass die Kristallisationskeime Al(OH)₃ sind und ihre Konzentration 180 bis 200 g/l beträgt.

Bei der Erfindung nach Anspruch 5 handelt es sich um eine Vorrichtung zur Anwendung der oben aufgeführten Verfahren. Sie besteht aus einem Elektrolysebad, in dem eine basische Ätzlösung, die zum Ätzen von Aluminium verwendet wurde, einer Elektrodialyse mit einer Ionenaustauschermembran unterworfen wird, einem Ablassrohr, das an die Kathodenseite dieses Elektrolysebads angebracht ist und mit dem ein Teil der freien Basen abgelassen wird, und einem Zerlegungsbad, das mit der Anodenseite des genannten Elektrolysebads verbunden ist und in dem die basische Ätzlösung, von der ein Teil der freien Basen abgetrennt wurde, einer Hydrolyse unterworfen wird.

Die genannte Ätzlösung besitzt eine hohe Al-Konzentration (30 bis 40 g/l oder mehr). Durch die Abtrennung eines Teils der freien Basen von der Ätzlösung tritt eine Sättigung mit Al ein.

Um z. B. 38g/l Al zu lösen, werden 124 g/l F. NaOH (freie Basen) und 180g/l oder mehr T. NaOH (gesamte Basen, d. h. freie und gebundene Basen) benötigt. Im Sättigungszustand reicht die Basenmenge nicht aus, um die gesamte Al-Menge zu lösen. Durch die Elektrodialyse mit einer Ionenaustauschermembran kann bei einer Basenmenge, die ausreicht, um das A1 zu lösen, durch die Abtrennung von 10 bis 50 % der freien Basen ein Übersättigungszustand oder ein extremer Übersättigungszustand (im Folgenden gemeinsam als "Übersättigungszustand" bezeichnet) erreicht werden. Mit anderen Worten: Im ersten Prozess wird eine so große Menge freier Basen von der Ätzlösung getrennt, wie es für die Sättigung mit A1 notwendig ist.

Als freie Base liegt das genannte NaOH in hoher Reinheit vor. Um eine bestimmte Menge freier Basen von der Ätzlösung zu trennen, werden die elektrische Stromdichte und die Menge der Ätzlösung, die der Anodenkammer des Elektrolysebads zugeführt wird, reguliert.

Durch das Hinzufügen von Kristallisationskeimen zu der mit A1 übersättigten Ätzlösung kann die Hydrolyse stark beschleunigt werden. Das lässt sich darauf zurückführen, dass durch das Hinzufügen von Kristallisationskeimen der Übersättigungszustand aufgehoben wird. Als Kristallisationskeim wird normalerweise Al(OH)₃ verwendet.

Eine geeignete Konzentration für die genannten Kristallisationskeime Al(OH)₃ sind etwa 180 bis 200g/l. Wenn außerdem das Verhältnis der Konzentration der freien Basen zur Konzentration der Metalle, die keine Alkalimetalle sind, im Elektrolysebad kleiner gleich 1 gehalten wird, nimmt die Geschwindigkeit der Hydrolyse noch zu, so dass die Menge des NaOH, die durch die Elektrolyse zurück gewonnen wird, reduziert werden kann und man ohne ein großes Elektrolysebad auskommt und sich auch die Investitionen für die Vorrichtung reduzieren.

Bei den genannten Metallen, die keine Alkali-Metalle sind, handelt es sich um A1, Si und andere. [Wirkung der Erfindung]

Bei dieser Erfindung wird die Hydrolyse der basischen Ätzlösung dadurch gefördert, dass in dem ersten Prozess freie Basen von der Ätzlösung getrennt werden. Durch das Hinzufügen der Kristallisationskeime wird die Hydrolyse noch weiter gefördert, so dass die Basen in dem zweiten Prozess fast augenblicklich abgetrennt werden. Außerdem wird auch bei einer basischen Ätzlösung, die sich bisher nicht durch Zerlegung behandeln lässt, weil ihr ein Hydrolysehemmer hinzugesetzt wurde, ein Fortschreiten der Hydrolyse und damit eine Basenrückgewinnung ermöglicht. [Optimale Ausführungsform der Erfindung]

Die Figur zeigt das Blockdiagramm einer Vorrichtung, in der die Erfindung zur Ausführung kommt. In einem Elektrolysebad 1, in dem eine basische Ätzlösung, die zum Ätzen von Aluminium verwendet wurde, einer Elektrodialyse mit einer Ionenaustauschermembran unterworfen wird, sind durch eine Ionenaustauschermembran 11 getrennt eine Anode 12 und eine Kathode 13 angebracht und weiter sind auf der Kathodenseite ein Stutzen für ein Ablassrohr 14, durch das ein Teil der freien Basen abgelassen wird, und auf der Anodenseite ein Stutzen für ein Ausströmungsrohr 15, durch das die basische Ätzlösung, von der ein Teil der freien Basen abgetrennt wurde, in ein Zerlegungsbad 4 geführt wird, angebracht.

Am vorderen Ende des genannten Ablassrohrs 14 ist ein Gasabscheider 2, durch den H₂ abgetrennt wird, und am vorderen Ende des genannten Ausströmungsrohrs 15 ist ein Gasabscheider 3, durch den O₂ abgetrennt wird und der mit dem Zerlegungsbad 4 verbunden ist, angebracht.

Dieses Zerlegungsbad 4 dient der Hydrolyse, durch die die basische Ätzlösung, von der ein Teil der freien Basen abgetrennt wurde, in NaOH und Al(OH)₃ zerlegt wird. Dabei wird das NaOH in einen Ätztank zurückgeführt.

Die basischen Ätzlösung, die zum Ätzen von Aluminium verwendet wurde, enthält NaOH und Al. Wenn diese Lösung in das Elektrolysebad 1 geleitet wird, wird NaOH an der Anode durch die Elektrolyse zerlegt und Na⁺ abgespalten, das zur Kathodenseite wandert. Dieses bindet sich dort mit dem durch die Kathodenreaktion erzeugten OH zu NaOH, das als freie Base mit großer Reinheit entsteht. Durch die Regulierung der Stromdichte und der Menge der Ätzlösung, die der Anodenkammer des Elektrolysebads zugeführt wird, wird erreicht, dass eine bestimmte Menge an freien Basen von der Ätzlösung getrennt wird.

Während eine bestimmte Menge an freien Basen von der Ätzlösung getrennt und durch das genannte Ablassrohr 14 abgelassen wird, wird die zurückbleibende Ätzlösung durch das Ausströmungsrohr 15 in das Zerlegungsbad 4 geleitet.

Im Zerlegungsbad 4 wird die Ätzlösung hydrolysiert und in NaOH und Al(OH)₃ zerlegt.

NaAlO₂ + 2H₂O → NAOH + Al(OH)₃

### [Ausführungsbeispiel 1]

1000 ml einer basischen Ätzlösung, die 55g/l freie Basen und 20g/l A1 enthielt, wurde der Behandlung in einem Elektrolysebad, das eine Ionenaustauschermembran als Scheidewand enthielt, unterzogen. Der Betrieb erfolgte batchweise mit einer Stromdichte von 10A/dm². Die freien Basen wurden durch die Dealkalisierung auf 28g/l gebracht. Nachdem diese Lösung eine Nacht lang im Zerlegungsbad stand, konnte die Abscheidung von Al(OH)₃ und Al₂O₃ beobachtet werden.

### [Ausführungsbeispiel 2]

1000 ml einer basischen Ätzlösung, die 55g/l freie Basen und 20g/l A1 enthielt, wurde der Behandlung in einem Elektrolysebad, das eine Ionenaustauschermembran als Scheidewand enthielt, unterzogen. Der Betrieb erfolgte batchweise mit einer Stromdichte von 10A/dm². Die freien Basen wurden durch die Dealkalisierung auf 28g/l gebracht. Nachdem dieser Lösung im Zerlegungsbad 180g Al(OH)₃ als Kristallisationskeime hinzugefügt wurden, trat sofort die Abscheidung von Al(OH)₃ ein.

Das Hinzufügen der Kristallisationskeime zeigt eine im Vergleich zu Ausführungsbeispiel 1 erkennbare Wirkung.

### [Ausführungsbeispiel 3]

1500 ml einer basischen Ätzlösung, die ein Mittel, das die Zerlegung behindert, und 52,3g/l freie Basen und 49,5g/l A1 enthielt, wurde der Behandlung in einem Elektrolysebad, das eine Ionenaustauschermembran als Scheidewand besaß, unterzogen. Der Betrieb erfolgte batch-weise mit einer Stromdichte von 10A/dm². Die freien Basen wurden durch die Dealkalisierung auf 35,7g/l gebracht. Nachdem dieser Lösung im Zerlegungsbad 180g Al(OH)₃ als Kristallisationskeime hinzugefügt wurden, trat sofort die Abscheidung von Al(OH)₃ ein.

Dieses Ergebnis zeigt, dass auch für basische Ätzlösungen, die Hydrolysehemmer enthalten und für die bisher eine Basenrückgewinnung durch Hydrolyse nicht möglich ist, eine schnelle Basenrückgewinnung durch Hydrolyse realisiert werden kann. [Mögliche industrielle Nutzung]

Diese Erfindung ermöglicht es, mit einer einfach aufgebauten Vorrichtung auf schnelle Weise die Basen in einer basischen Ätzlösung zurückzugewinnen. Wegen der hohen Zerlegungsgeschwindigkeit ist es möglich, mit einem Elektrolysebad von kleiner Kapazität und einem Zerlegungsbad von einer kleiner Kapazität große Mengen von Ätzlösung zu behandeln. Dies macht die Erfindung industriell nützlich, z.B. weil Vorrichtungen kompakter gestaltet und Kosten verringert werden können.

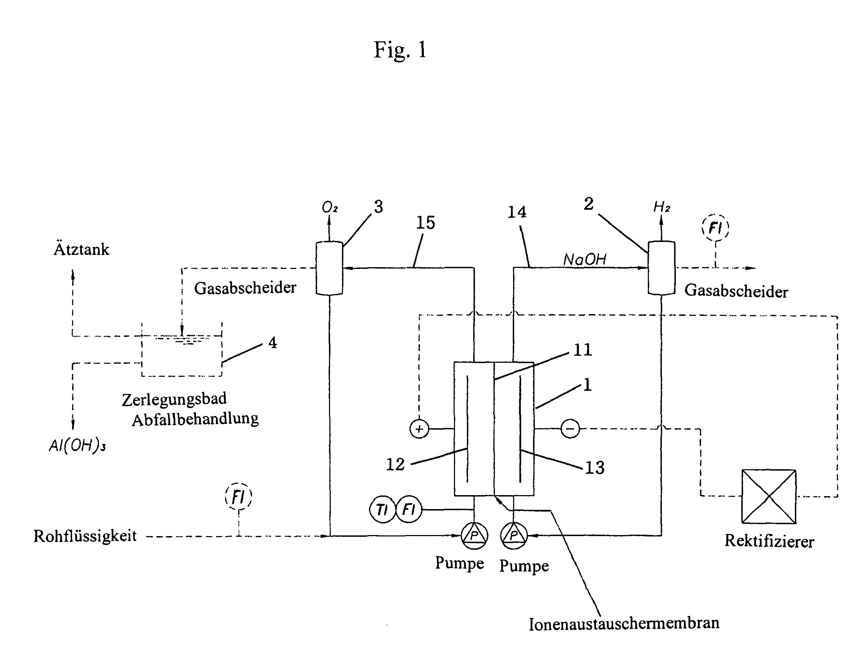

### [Vereinfachte Erläuterung der Figur] [Fig. 1] Sie zeigt eine grobe Skizze der Vorrichtung dieser Erfindung.

### [Erläuterung der Zeichen]

- 1: Elektrolysebad
- 11: Ionenaustauschermembran
- 12: Anode
- 13: Kathode
- 2: Gasabscheider
- 3: Gasabscheider
- 4: Zerlegungsbad

## Patentansprüche

1. Verfahren zur Rückgewinnung der Basen in einer basischen Ätzlösung, **dadurch gekennzeichnet, dass** eine basische Ätzlösung, die zum Ätzen von Aluminium verwendet wurde, in ein Elektrolysebad geleitet wird, dass durch Elektrodialyse mit einer Ionenaustauschermembran ein Teil der freien Basen von der genannten basischen Ätzlösung getrennt wird, und dass dann die Ätzlösung, von der ein Teil der freien Basen getrennt wurde, hydrolysiert wird und dadurch NaOH und Al(OH)₃ gewonnen werden.

2. Verfahren zur Rückgewinnung der Basen in einer basischen Ätzlösung nach Anspruch 1, **dadurch gekennzeichnet, dass** durch die Trennung eines Teils der freien Basen von der basischen Ätzlösung das Gewichtsverhältnis der Konzentration der freien Basen zur Konzentration der Metalle, die keine Alka-li-Metalle sind, kleiner gleich 1 wird.

3. Verfahren zur Rückgewinnung der Basen in einer basischen Ätzlösung nach Anspruch 1 oder 2, **dadurch gekennzeichnet, dass** bei der Hydrolyse Kristallisationskeime hinzugefügt werden.

4. Verfahren zur Rückgewinnung der Basen in einer basischen Ätzlösung nach Anspruch 3, **dadurch gekennzeichnet, dass** die Kristallisationskeime Al(OH)₃ sind und ihre Konzentration 180 bis 200 g/l beträgt.

5. Vorrichtung zur Rückgewinnung der Basen in einer basischen Ätzlösung, die als Ausstattung ein Elektrolysebad, in dem eine basische Ätzlösung, die zum Ätzen von Aluminium verwendet wurde, einer Elektrodialyse mit einer Ionenaustauschermembran unterworfen wird, ein Ablassrohr, das an der Kathodenseite dieses Elektrolysebads angebracht ist und mit dem ein Teil der freien Basen abgelassen wird, und ein Zerlegungsbad, das mit der Anodenseite des genannten Elektrolysebads verbunden ist und in dem die basische Ätzlösung, von der ein Teil der freien Basen abgetrennt wurde, einer Hydrolyse unterworfen wird, besitzt.
